# EUROPEAN PATENT APPLICATION

(11) **EP 4 084 404 A1**
(43) Date of publication of application: **02.11.2022**
(21) Application number: 20906756.0
(22) Date of filing: 06.11.2020
(51) Int. Cl.: H04L 12/14

(54) **FORWARDING METHOD AND DEVICE, AND BROADBAND REMOTE ACCESS SERVER FORWARDING PLANE**

(30) Priority: 27.12.2019 CN 201911382453
(71) Applicant: ZTE Corporation, Shenzhen, Guangdong 518057 (CN)
(72) Inventor: HUANG, Guangping, Shenzhen, Guangdong 518057 (CN)
(74) Representative: Betten & Resch
(86) International application number: PCT/CN2020/127062
(87) International publication number: WO 2021/129190

(57) **Abstract**

The present application provides a forwarding method and device, and a broadband remote access server forwarding plane. The method comprises: obtaining a user access control packet; forwarding the user access control packet and associated identification information of a BRAS-UP to a control plane(BRAS-CP) of the broadband remote access server; receiving a primary user forwarding entry sent from the BRAS-CP, the primary user forwarding entry being determined at an access control process node on the basis of the user access control packet and the associated identification information, and the access control process node is a node before user data traffic reaches the BRAS-UP; and forwarding a subsequent user access control packet on the basis of the primary user forwarding entry.

## Description

### CROSS-REFERENCE TO RELATED APPLICATION

The present application claims the benefit of priority to Chinese Patent Application No. 201911382453.4 filed to China Patent Office on December 27,2019, the disclosure of which is incorporated herein by reference in its entirety.

### TECHNICAL FIELD

The present disclosure relates to the communications field, for example, to a forwarding method and apparatus, and a broadband remote access server user plane.

### BACKGROUND

Wired broadband access is a basic access service of home broadband, enterprise private lines, Wireless-Fidelity (Wi-Fi), and the like, and is the second mainstream broadband access service after mobile broadband. Control and user plane separation of a wired broadband access device based on Software-Defined Networking (SDN)/Network Function Virtualization (NFV) has been a consensus of the industry, and has been commercially deployed in domestic and international markets. Relevant domestic and international standards organizations are actively developing standards to realize an interconnection and communication between a user plane and a control plane of the access device.

Control and user plane separation of the wired broadband access device refers to separation of the user plane and the control plane of the wired broadband access device. In a process of wired broadband access with control and user plane separation, a large number of invalid access requests or even malicious and aggressive access requests may uncontrollably reach a broadband remote access server (BRAS) control plane (BRAS-CP) and an Authentication, Authorization, Accounting (AAA) server, exerting damaging processing pressure on the BRAS-CP and the AAA server, and causing severe interference and impact to a normal broadband access service.

### SUMMARY

The present disclosure provides a forwarding method and apparatus, and a broadband remote access server user plane.

An embodiment of the present disclosure provides a forwarding method applicable to a broadband remote access server user plane (BRAS-UP), including:
obtaining a user access control message;
forwarding the user access control message and associated identification information of the BRAS-UP to a BRAS-CP;
receiving a primary user forwarding table entry sent by the BRAS-CP, where the primary user forwarding table entry is determined at an access control process node based on the user access control message and the associated identification information, and the access control process node is a node existing before user data traffic reaches the BRAS-UP; and
forwarding a subsequent user access control message based on the primary user forwarding table entry.

The present disclosure provides a forwarding method applicable to the BRAS-CP, including:
receiving a user access control message and associated identification information of a BRAS-UP sent by the BRAS-UP;
determining a primary user forwarding table entry at an access control process node based on the user access control message and the associated identification information, where the access control process node is a node existing before user data traffic reaches the BRAS-UP; and
sending the primary user forwarding table entry to the BRAS-UP.

An embodiment of the present disclosure provides a forwarding apparatus configurable on a BRAS-UP, including:
an obtaining module, configured to obtain a user access control message;
a first forwarding module, configured to forward the user access control message and associated identification information of the BRAS-UP to a BRAS-CP;
a receiving module, configured to receive a primary user forwarding table entry sent by the BRAS-CP, where the primary user forwarding table entry is determined at an access control process node based on the user access control message and the associated identification information of the BRAS-UP, and the access control process node is a node existing before user data traffic reaches the BRAS-UP; and
a second forwarding module, configured to forward a subsequent user access control message based on the primary user forwarding table entry.

The present disclosure provides a forwarding apparatus configurable on a BRAS-CP, including:
a receiving module, configured to receive a user access control message and associated identification information of a BRAS-UP sent by the BRAS-UP;
a determining module, configured to determine a primary user forwarding table entry at an access control process node based on the user access control message and the associated identification information of the BRAS-UP, where the access control process node is a node existing before user data traffic reaches the BRAS-UP; and
a sending module, configured to send the primary user forwarding table entry to the BRAS-UP.

The present disclosure provides a broadband remote access server user plane, including:
at least one processor; and
a storage device, configured to store at least one program which, when executed by the at least one processor, causes the at least one processor to perform the method applicable to the BRAS-UP of the present disclosure.

The present disclosure provides a broadband remote access server control plane, including:
at least one processor; and
a storage device, configured to store at least one program which, when executed by the at least one processor, causes the at least one processor to perform the method applicable to the BRAS-CP of the present disclosure.

An embodiment of the present disclosure provides a storage medium storing a computer program which, when executed by a processor, causes the processor to perform any one of the methods in the embodiments of the present disclosure.

The above embodiments and other aspects and the implementations thereof in the present disclosure are further described in the brief description of drawings, detailed description, and appended claims.

### BRIEF DESCRIPTION OF DRAWINGS

Fig. 1 is a flowchart of a forwarding method according to the present disclosure;
Fig. 2 is a flowchart of another forwarding method according to the present disclosure;
Fig. 3a is a flowchart of a forwarding method in a PPPoE (IPv4) access process according to the present disclosure;
Fig. 3b is a flowchart of a forwarding method in a PPPoE dual-stack (IPv4/IPv6) access process according to the present disclosure;
Fig. 3c is a flowchart of a forwarding method in an IPoE (IPv4) access process according to the present disclosure;
Fig. 3d is a flowchart of a forwarding method in an IPoE (IPv6) access process according to the present disclosure;
Fig. 3e is a flowchart of a forwarding method in an IPv6SLAAC access process according to the present disclosure;
Fig. 3f is a flowchart of a forwarding method in an IPv6 PPPoE access process according to the present disclosure;
Fig. 3g is a flowchart of a forwarding method in an IPoE dual-stack (IPv4/IPv6) access process according to the present disclosure;
Fig. 3h is a flowchart of a forwarding method in a Layer 2 Tunneling Protocol (L2TP) (a BRAS serving as an L2TP Access Concentrator (LAC)) access process according to the present disclosure;
Fig. 3i is a flowchart of a forwarding method in an L2TP (a BRAS serving as an LNS) access process according to the present disclosure;
Fig. 4 is a schematic diagram of a structure of a forwarding apparatus according to the present disclosure;
Fig. 5 is a schematic diagram of a structure of another forwarding apparatus according to the present disclosure;
Fig. 6 is a schematic diagram of a structure of a broadband remote access server user plane according to the present disclosure; and
Fig. 7 is a schematic diagram of a structure of a broadband remote access server control plane according to the present disclosure.

### DETAILED DESCRIPTION

The embodiments of the present disclosure will be described below with reference to the accompanying drawings.

The steps shown in the flowcharts of the drawings may be performed in a computer system, such as with a set of computer-executable instructions. Moreover, although a logical order is shown in the flowcharts, the steps shown or described may be performed, in some cases, in a different order from that shown or described herein.

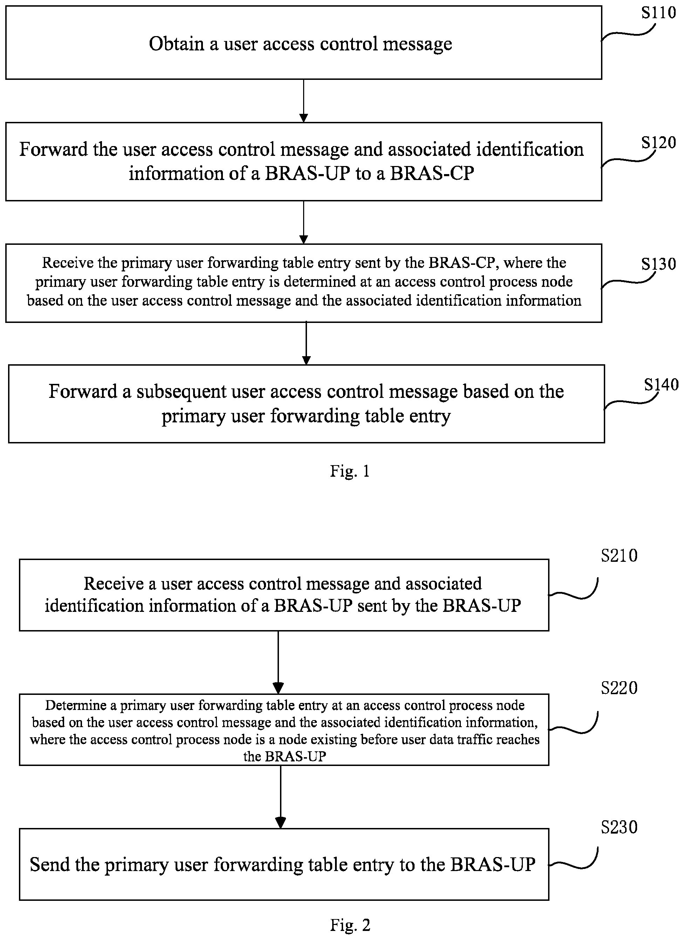

In an example embodiment, Fig. 1 is a flowchart of a forwarding method according to the present disclosure. The method can be used to reduce invalid access requests or even malicious and aggressive access requests. The method may be executed by a forwarding apparatus provided by the present disclosure. The forwarding apparatus may be implemented by software and/or hardware and integrated on a BRAS-UP.

With the rapid development of emerging access services such as Internet Protocol Television (IPTV) and high-definition video, a conventional mode of control and user plane integration for a wired access network device is gradually unsuitable for requirements of cloud-based network architectures, rapid development and delivery of new services, and the like. Control and user plane separation for a wired broadband access device has become a consensus of the industry.

Control and user plane separation for the wired broadband access device is to realize centralized deployment of the control plane. In other words, the control plane is deployed in the cloud, and responsible for management of users and policies. Distributed deployment of the user plane aims to work on the user side, to process uplink and downlink forwarding of user data traffic with dedicated forwarding hardware. This functional division and separate deployment of the user plane and the control plane not only bring benefits by improving operation efficiency, but also put forward new requirements for an interaction process between the control plane and the user plane, and an interface protocol as well.

Wired broadband access generally includes two stages: access control and traffic forwarding. A user access control process includes an interaction and authentication process for a user access request message, for example, a Point-to-Point Protocol over Ethernet (PPPoE), an Internet Protocol over Ethernet (IPoE), or an L2TP. The interaction and authentication process is initiated by a user access gateway, for example, a residential gateway (RG), and accesses the BRAS-UP via an access network (AN) device, for example, a digital subscriber line access multiplexer (DSLAM) or an optical line terminal (OLT). Then the BRAS-UP performs access control interaction with a BRAS-CP, and the access control process is completed. In this case, user authentication succeeds and an effective address is allocated. Next, a user data traffic forwarding process is entered.

After the entire access control process ends, in the wired broadband access process, the BRAS-CP delivers a user forwarding table entry to the BRAS-UP, and the BRAS-UP performs corresponding policy processing and traffic forwarding for the user data traffic according to the user forwarding table. The benefits of this process are that the user forwarding table entry is only delivered to a user who is authorized and for whom access control authentication has succeeded, which maximizes efficiency of delivering the forwarding table entry and minimizes consumption of BRAS-UP resources. However, delayed delivery of the forwarding table entry may cause a situation that a large number of invalid access requests or even malicious and aggressive access requests uncontrollably reach the BRAS-CP and an AAA server, exerting damaging processing pressure on the BRAS-CP and the AAA server, and causing severe interference and impact to a normal broadband access service.

The forwarding method provided by the present disclosure can effectively solve the above technical problem. As shown in Fig. 1, a forwarding method provided by the present disclosure includes S110, S120, S130, and S140.

At S110, a user access control message is obtained.

The user access control message may be regarded as a control message for completing broadband access. The user access control message is not limited herein, and varies with different access scenarios.

For example, in a PPPoE IPv4 broadband access scenario, the user access control message may be a PPPoE Active Discovery Initiation (PADI) message. The user access control message under IPoE 4 Internet Protocol Version 4 (IPv4) broadband access may be a Dynamic Host Configuration Protocol (DHCP) discover message.

At S120, the user access control message and associated identification information of the BRAS-UP are forwarded to the BRAS-CP.

After obtaining the user access control message, the user access control message and the associated identification information of the BRAS-UP can be sent to the BRAS-CP in this step to establish a primary user forwarding table entry.

The associated identification information of the BRAS-UP may be information indicating a physical identification position at which the BRAS-UP actually forwards the user access control message. The associated identification information includes but is not limited to a chassis number, a slot number, a board, a port, and the like. The primary user forwarding table entry may be pre-constructed based on the user access control message and the associated identification information. The primary user forwarding table entry may be updated after the access control process is completed, to obtain a target user forwarding table entry. The primary user forwarding table entry may be a rule formulated by the BRAS-CP. Based on the primary user forwarding table entry, a method for processing a subsequent message by the BRAS-UP, for example, a method for processing a subsequent user access control message or data message, can be pre-determined. There is no limitation on construction of the primary user forwarding table entry herein, provided that a rule of subsequent message forwarding for the BRAS-UP can be specified, for example, specifying some specific messages to be forwarded. The message to be forwarded can be forwarded through a basic information identifier of user access. In other words, a message sent by a user whose basic information of user access is the same as preset basic information is forwarded. Different BRAS-CPs can construct different primary user forwarding table entries based on different access control information and associated identification information.

At S130, the primary user forwarding table entry sent by the BRAS-CP is received, where the primary user forwarding table entry is determined at an access control process node based on the user access control message and the associated identification information.

The primary user forwarding table entry may be constructed by the BRAS-CP based on the user access control message and the associated identification information, and the associated identification information may be used to identify the BRAS-UP. The BRAS-UP may receive the primary user forwarding table entry through a control interface between BRAS-CP and the BRAS-UP.

The BRAS-CP may create the primary user forwarding table entry at the access control process node, which is a node existing before the user data traffic reaches the BRAS-UP.

For example, the access control process node may be a node existing before the control process ends. For example, the access control process node may be a node existing after the first user access control message is forwarded to the BRAS-CP or after an AAA process ends.

At S140, a subsequent user access control message is forwarded based on the primary user forwarding table entry.

The BRAS-UP can control forwarding of the subsequent user access control message based on the primary user forwarding table entry, after receiving the primary user forwarding table entry. The subsequent user access control message may be regarded as a user access control message received subsequently.

After receiving the primary user forwarding table entry, the BRAS-UP matches corresponding content in the subsequent user access control message with corresponding content in the primary user forwarding table entry, for example, matches Media Access Control (MAC) addresses or Virtual Local Area Networks (VLAN); and forwards a matched user access control message to the BRAS-CP. Therefore, a probability that a large number of invalid access requests or even malicious and aggressive access requests are forwarded is effectively reduced.

The forwarding method provided by the present disclosure includes the following steps: firstly, obtaining the user access control message; then forwarding the user access control message and the associated identification information of the BRAS-UP to the BRAS-CP; next, receiving the primary user forwarding table entry sent by the BRAS-CP, where the primary user forwarding table entry is determined at the access control process node based on the user access control message and the associated identification information, and the access control process node is a node existing before the user data traffic reaches the BRAS-UP; and finally, forwarding the subsequent user access control message based on the primary user forwarding table entry. This method effectively reduces the probability that a large number of invalid access requests or even malicious and aggressive access requests are forwarded to the BRAS-CP, and reduces a processing pressure of the BRAS-CP.

On the basis of the foregoing embodiment, a modified embodiment of the foregoing embodiment is proposed. For simplified description, only differences from the foregoing embodiment are described in the modified embodiment.

In an embodiment, the access control process node includes: a node existing after the BRAS-CP obtains the user access control message including basic information of user access; or a node existing after the AAA process for user access control ends.

The user access control message including the basic information of user access is not limited herein, provided that the user access control message includes the basic information of user access. The primary user forwarding table entry can be constructed by using the basic information. Invalid access requests and malicious and aggressive access requests can be filtered based on matching of the basic information in the primary user forwarding table entry. The basic information may be regarded as information that can identify a user during broadband access, for example, a MAC address, or a VLAN port.

After the AAA process ends, the BRAS-CP can construct the primary user forwarding table entry based on the obtained information, for example, the obtained access control information.

In an embodiment, the method further includes: receiving a target user forwarding table entry, where the target user forwarding table entry is obtained by updating the primary user forwarding table entry based on the obtained user access control message and the associated identification information of the BRAS-UP after the access control process ends.

User forwarding table entries include the primary user forwarding table entry and the target user forwarding table entry. The primary user forwarding table entry may be pre-constructed for the BRAS-UP to forward a user access control message subsequently obtained. The target user forwarding table entry may be a user forwarding table entry obtained by updating the primary user forwarding table entry.

After the access control process ends, more information for constructing the user forwarding table entry can be obtained in the present disclosure, so that in the present disclosure, the primary user forwarding table entry can be updated based on the obtained user access control message and the associated identification information, that is, information in the primary user forwarding table entry is supplemented. Updating means is not limited herein, and can be determined by those having ordinary skills in the art based on an actual situation, provided that the determined target user forwarding table entry can be used to control subsequent traffic.

The present disclosure further provides a forwarding method. Fig. 2 is a flowchart of another forwarding method according to the present disclosure. The method can be used to reduce invalid access requests or even malicious and aggressive access requests. The method may be executed by a forwarding apparatus provided by the present disclosure. The forwarding apparatus may be implemented by software and/or hardware, and integrated on a BRAS-CP.

As shown in Fig. 2, the forwarding method provided by the present disclosure includes: S210, S220 and S230.

At S210, a user access control message and associated identification information of a BRAS-UP sent by the BRAS-UP are received.

At S220, a primary user forwarding table entry is determined at an access control process node based on the user access control message and the associated identification information, where the access control process node is a node existing before user data traffic reaches the BRAS-UP.

At S230, the primary user forwarding table entry is sent to the BRAS-UP.

For content that is not explained in this embodiment, refer to the foregoing embodiments. Details are not repeated herein again.

The forwarding method provided by the present disclosure includes the following steps: firstly, receiving the user access control message and the associated identification information of the BRAS-UP sent by the BRAS-UP; then determining the primary user forwarding table entry at the access control process node based on the user access control message and the associated identification information, where the access control process node is a node existing before the user data traffic reaches the BRAS-UP; and finally, sending the primary user forwarding table entry to the BRAS-UP. This method effectively reduces a probability that a large number of invalid access requests or even malicious and aggressive access requests are forwarded to the BRAS-CP, and reduces a processing pressure of the BRAS-CP.

On the basis of the foregoing embodiment, a modified embodiment of the foregoing embodiment is proposed. For simplified description, only differences from the foregoing embodiment are described in the modified embodiment.

In an embodiment, the access control process node includes: a node existing after the user access control message including basic information of user access is obtained; or a node existing after the AAA process for user access control ends.

In an embodiment, the method further includes: obtaining a target user forwarding table entry by updating the primary user forwarding table entry based on the obtained user access control message and the associated identification information of the BRAS-UP after an access control process ends; and sending the target user forwarding table entry to the BRAS-UP.

The following provides example descriptions of the forwarding method provided by the present disclosure. The forwarding method provided by the present disclosure can be regarded as a technical process and method for dynamically creating a user forwarding table entry in a wired broadband service access scenario.

The forwarding method provided in the present disclosure may be regarded as a process mechanism of multi-node delivery of the user forwarding table entry, that is, delivering the user forwarding table entry and creating nodes, and performing dynamic adjustment according to scenarios and service needs. This is to make full use of the created forwarding table entry and the nodes that perform delivery, to achieve optimal protection of a control plane, an AAA server and a user plane.

The user forwarding table entry may be created and delivered at the following nodes.
1. The first user access control message (which may include basic information of user access), for example, a PADI of a PPPoE, or a DHCP discover message of an IPOE, is forwarded from a BRAS-UP to a BRAS-CP. Herein, the message forwarded by the BRAS-UP to the BRAS-CP includes required information (for example, a user access control message) of an access protocol, and further includes an identifier and location information (for example, associated identification information) of the BRAS-UP device, including a chassis number, a slot number, a board, a port, and the like, which can be used by the BRAS-CP to reply and deliver a subsequent message and create a forwarding table entry. The BRAS-CP creates a primary user forwarding table entry and delivers it to the BRAS-UP through a control interface between the control plane and the user plane. The BRAS-UP forwards a subsequent user access control message according to the primary user forwarding table entry, thereby ensuring that invalid and aggressive access request messages are not forwarded to the BRAS-CP and the AAA server. After a subsequent access control process ends, that is, after access authentication and address allocation are completed for a user, the BRAS-CP updates the primary user forwarding table entry to obtain a target user forwarding table entry, and sends an update request to the BRAS-UP. The BRAS-UP forwards user data traffic according to the latest user forwarding table entry, namely, the target user forwarding table entry.
2. After a AAA process for user access control ends, the message forwarded by the BRAS-UP to the BRAS-CP includes the required information of the access protocol, and further includes the identifier and the location information of the BRAS-UP device, including a chassis number, a slot number, a board, a port, and the like, which can be used by the BRAS-CP to reply and deliver a subsequent message and create a primary user forwarding table entry. The BRAS-CP creates the primary user forwarding table entry and delivers it to the BRAS-UP through the control interface between the control plane and the user plane. The BRAS-UP controls forwarding of the subsequent user access control message according to the primary user forwarding table entry, thereby ensuring that subsequent invalid and aggressive access request messages are not forwarded to the BRAS-CP and the AAA server. Meanwhile, it also ensures that an invalid and aggressive user table entry is not created and sent to the user plane. After a subsequent access control process ends, that is, after address allocation is completed for the user, the BRAS-CP updates the primary user forwarding table entry to obtain a target user forwarding table entry, and sends an update request to the BRAS-UP. The BRAS-UP forwards user data traffic according to the latest user forwarding table entry, namely, the target user forwarding table entry.
3. After all access control processes end, that is, after authentication and address allocation are completed for the user, the BRAS-CP creates a target user forwarding table entry and delivers it to the BRAS-UP. The BRAS-UP forwards user data traffic according to the target user forwarding table entry. Herein, the message forwarded by the BRAS-UP to the BRAS-CP includes the required information of the access protocol, and further includes the identifier and the location information of the BRAS-UP device, including a chassis number, a slot number, a board, a port, and the like, which can be used by the BRAS-CP to reply and deliver a subsequent message and create a target user forwarding table entry.

Provided that a user forwarding table entry, namely, the target user forwarding table entry, is created on the BRAS-UP before the user data traffic reaches the BRAS-UP, the user data traffic can be forwarded normally. Therefore, the user forwarding table entry can be created at any node before the user data traffic reaches the BRAS-UP (that is, the primary user forwarding table entry is created), and updated after the access process ends, to obtain a target user forwarding table entry. In this way, normal forwarding of the user data traffic can be realized. The difference is that creating the user forwarding table entry at different nodes can meet different scenario deployment requirements, such as protection of the BRAS-CP and the AAA server, and protection of the BRAS-UP. Therefore, creating the forwarding table entry and the node that performs delivery are not limited to the foregoing scenario.

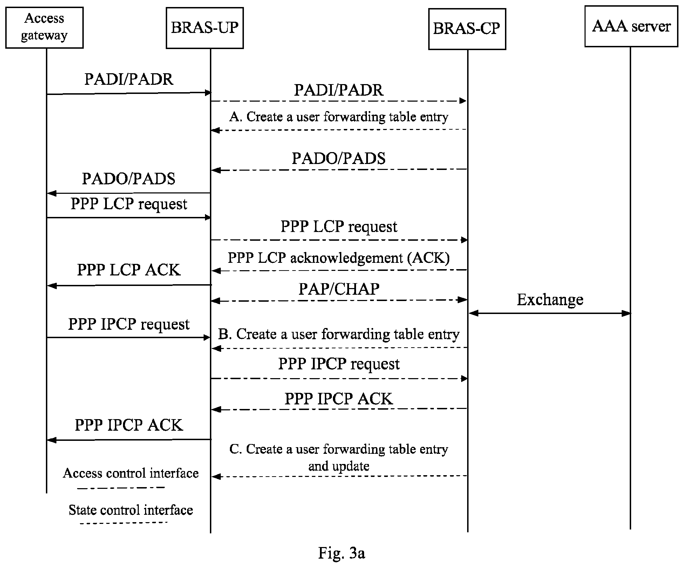

Fig. 3a is a flowchart of a forwarding method in a PPPoE (IPv4) access process according to the present disclosure, and Fig. 3a shows a process of creating and delivering a user forwarding table entry in a PPPoE IPv4 broadband access process. The user forwarding table entry may be created or updated at the following nodes.
A. After the first user access control message is forwarded from a BRAS-UP to a BRAS-CP, that is, after a PADI message is forwarded from the BRAS-UP to the BRAS-CP, the BRAS-CP creates a primary user forwarding table entry (namely, a user forwarding table entry shown by A in Fig. 3a), and delivers it to the BRAS-UP through a state control channel between the control plane and the user plane. The BRAS-UP forwards a subsequent user control message according to the primary user forwarding table entry, and updates the primary user forwarding table entry to obtain a target user forwarding table entry after an access process ends. The PADI message may be regarded as a user access control message including basic information of user access.
B. After AAA authentication is completed in the access control process, the BRAS-CP creates a primary user forwarding table entry (namely, a user forwarding table entry shown by B in Fig. 3a), and delivers it to the BRAS-UP. The BRAS-UP forwards a subsequent control message according to the primary user forwarding table entry, and updates the primary user forwarding table entry to obtain a target user forwarding table entry after the access process ends.
C. After all access control processes are completed, the BRAS-CP creates a user forwarding table entry (namely, a user forwarding table entry shown by C in Fig. 3a) and sends it to the BRAS-UP. The BRAS-UP forwards user service traffic according to the user forwarding table entry.

The primary user forwarding table entry and the target user forwarding table entry described in the present disclosure are collectively referred to as the user forwarding table entry. The primary user forwarding table entry and the target user forwarding table entry may be regarded as user forwarding table entries created at different times.

After all the access control processes are completed, the created user forwarding table entry may be regarded as the target user forwarding table entry. The target user forwarding table entry may be sent to the BRAS-UP after being created, to update the target user forwarding table entry.

A user forwarding table entry created before all the access control processes end may be regarded as a primary user forwarding table entry, which may be updated after all the access control processes end to obtain a target user forwarding table entry.

One of the operations of creation of a user forwarding table entry in A, B and C in Fig. 3a can exist. When at least two operations of creation exist, a previous user forwarding table entry may be deleted to create a new user forwarding table entry.

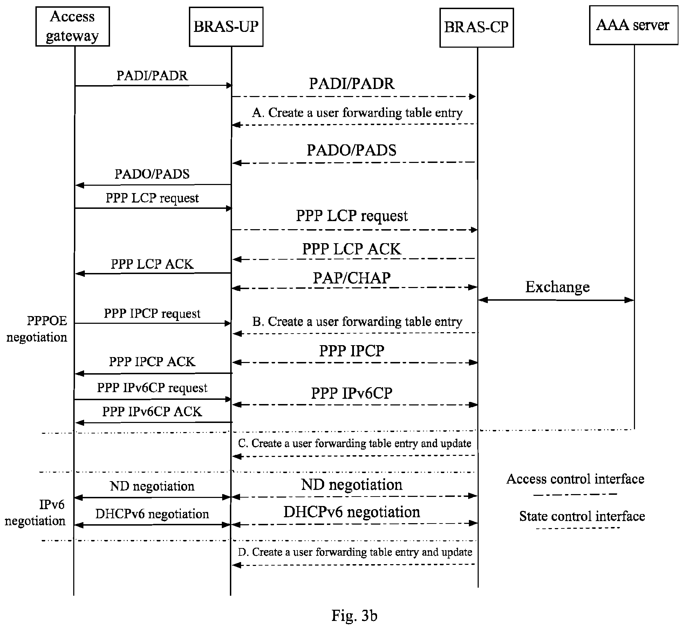

Fig. 3b is a flowchart of a forwarding method in a PPPoE dual-stack (IPv4/IPv6) access process according to the present disclosure, and Fig. 3b shows a flowchart of creating and delivering a user forwarding table entry in a PPPoE dual-stack IPv4/Internet Protocol Version 6 (IPv6) broadband access process. The user forwarding table entry may be created or updated at the following nodes.
A. After the first user access control message is forwarded from a BRAS-UP to a BRAS-CP, that is, after a PADI message is forwarded from the BRAS-UP to the BRAS-CP, the BRAS-CP creates a primary user forwarding table entry, and delivers it to the BRAS-UP through a state control channel between the control plane and the user plane. The BRAS-UP forwards a subsequent user control message according to the primary user forwarding table entry, and updates the forwarding table entry after an access process ends.
B. After AAA authentication is completed in the access control process, the BRAS-CP creates a primary user forwarding table entry, and delivers it to the BRAS-UP. The BRAS-UP forwards a subsequent control message according to the primary user forwarding table entry, and updates the forwarding table entry after the access process ends.
C. After an IPv4 PPPoE access control process ends, the BRAS-CP creates a user IPv4 forwarding table entry and delivers it to the BRAS-UP.
D. After an IPv6 address allocation process ends, the BRAS-CP creates a user IPv6 forwarding table entry, and delivers it to the BRAS-UP to update the forwarding table entry. The BRAS-UP forwards user service traffic according to the user IPv6 forwarding table entry.

Completion of the access control process includes completion of the IPv4 PPPoE access control process and completion of the IPv6 address allocation process. Target user forwarding table entries include the user IPv4 forwarding table entry and/or the user IPv6 forwarding table entry.

One of the operations of A, B, C and D in Fig. 3b can exist.

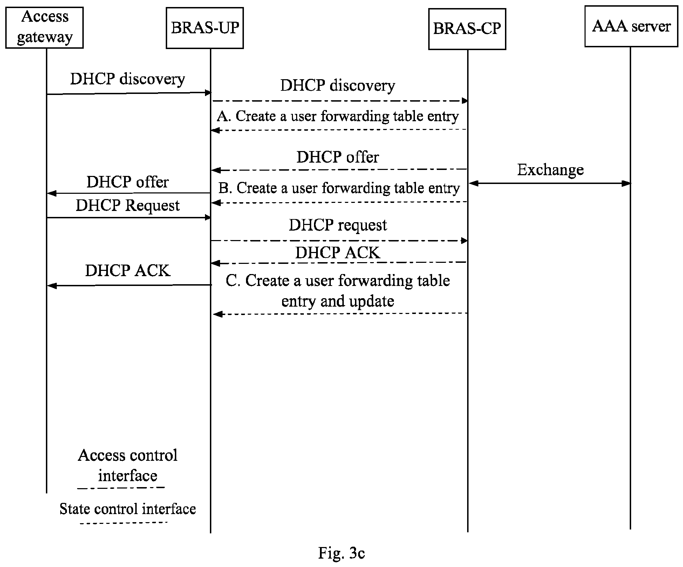

Fig. 3c is a flowchart of a forwarding method in an IPOE (IPv4) access process according to the present disclosure, and Fig. 3c shows a process of creating and delivering a user forwarding table entry in an IPOE (IPv4) broadband access process. The user forwarding table entry may be created or updated at the following nodes.
A. After the first user access control message is forwarded from a BRAS-UP to a BRAS-CP, that is, after a DHCP discover message is forwarded from the BRAS-UP to the BRAS-CP, the BRAS-CP creates a primary user forwarding table entry, and delivers it to the BRAS-UP through a state control channel between the control plane and the user plane. The BRAS-UP forwards a subsequent user control message according to the primary user forwarding table entry, and updates the forwarding table entry after an access process ends.
   It may be considered that the DHCP discover message includes basic information of user access.
B. After AAA authentication is completed in the access control process, the BRAS-CP creates a primary user forwarding table entry, and delivers it to the BRAS-UP. The BRAS-UP forwards a subsequent control message according to the primary user forwarding table entry, and updates the primary user forwarding table entry to obtain a target user forwarding table entry after the access process ends.
C. After all access control processes are completed, the BRAS-CP creates a user forwarding table entry and delivers it to the BRAS-UP. The BRAS-UP forwards user service traffic according to the user forwarding table entry.

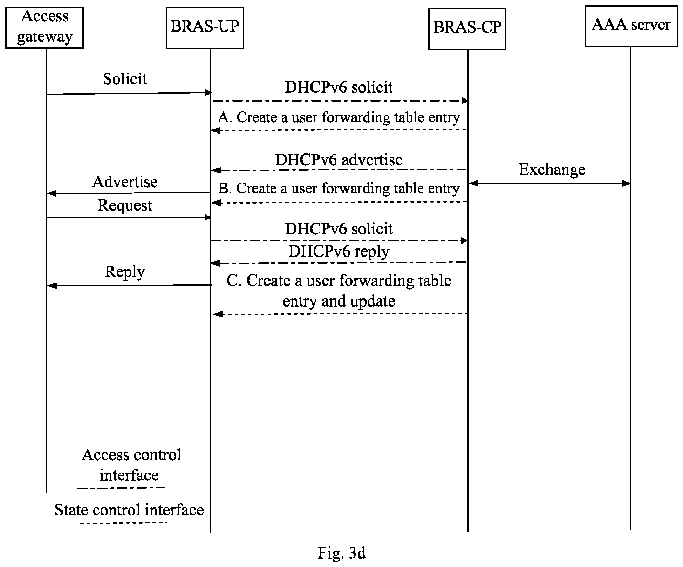

Fig. 3d is a flowchart of a forwarding method in an IPOE (IPv6) access process according to the present disclosure, and Fig. 3d shows a process of creating and delivering a user forwarding table entry in an IPOE (IPv6) broadband access process. The user forwarding table entry may be created or updated at the following nodes.
A. After the first user access control message is forwarded from a BRAS-UP to a BRAS-CP, that is, after a Dynamic Host Configuration Protocol for IPv6 (DHCPv6) solicit message is forwarded from the BRAS-UP to the BRAS-CP, the BRAS-CP creates a primary user forwarding table entry, and delivers it to the BRAS-UP through a state control channel between the control plane and the user plane. The BRAS-UP forwards a subsequent user control message according to the primary user forwarding table entry, and updates the primary user forwarding table entry to obtain a target user forwarding table entry after an access process ends.
B. After AAA authentication is completed in the access control process, the BRAS-CP creates a primary user forwarding table entry, and delivers it to the BRAS-UP. The BRAS-UP forwards a subsequent control message according to the primary user forwarding table entry, and updates the primary user forwarding table entry to obtain a target user forwarding table entry after the access process ends.
C. After all access control processes are completed, the BRAS-CP creates a target user forwarding table entry and delivers it to the BRAS-UP. The BRAS-UP forwards user service traffic according to the target user forwarding table entry.

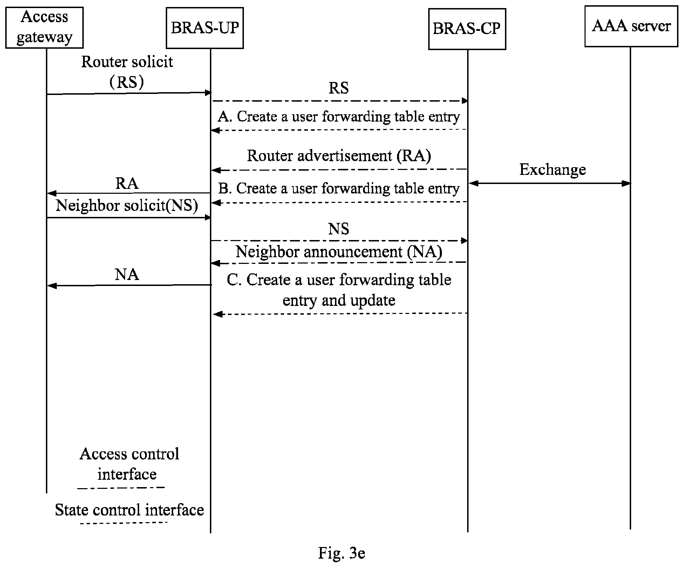

Fig. 3e is a schematic flowchart of a forwarding method in an IPv6 SLAAC access process according to the present disclosure. Fig. 3e shows creation and delivery of a user forwarding table entry in an IPv6 stateless address autoconfiguration (SLAAC) broadband access process, and the user forwarding table entry may be created or updated at the following nodes.
A. After a Router Solicit (RS) message is forwarded from a BRAS-UP to a BRAS-CP, the BRAS-CP creates a primary user forwarding table entry, and delivers it to the BRAS-UP through a state control channel between the control plane and the user plane. The BRAS-UP forwards a subsequent user control message according to the primary user forwarding table entry, and updates the primary user forwarding table entry to obtain a target user forwarding table entry after an access process ends.
B. After AAA authentication is completed in the access control process, the BRAS-CP creates a primary user forwarding table entry, and delivers it to the BRAS-UP. The BRAS-UP forwards a subsequent control message according to the primary user forwarding table entry, and updates the primary user forwarding table entry to obtain a target user forwarding table entry after the access process ends.
C. After all access control processes are completed, the BRAS-CP creates a user forwarding table entry and delivers it to the BRAS-UP. The BRAS-UP forwards user service traffic according to the user forwarding table entry.

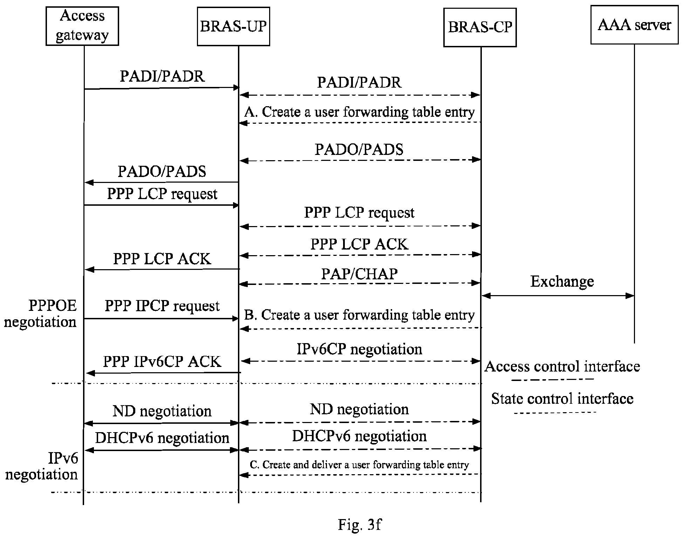

Fig. 3f is a schematic flowchart of a forwarding method in an IPv6 PPPoE access process according to the present disclosure, and Fig. 3f shows a schematic flowchart of creating and delivering a user forwarding table entry in an PPPoE IPv6 broadband access process. The user forwarding table entry may be created or updated at the following nodes.
A. After a PADI message is forwarded from a BRAS-UP to a BRAS-CP, the BRAS-CP creates a primary user forwarding table entry, and delivers it to the BRAS-UP through a state control channel between the control plane and the user plane. The BRAS-UP forwards a subsequent user control message according to the primary user forwarding table entry, and updates the primary user forwarding table entry to obtain a target user forwarding table entry after an access process ends.
B. After AAA authentication is completed in the access control process, the BRAS-CP creates a primary user forwarding table entry, and delivers it to the BRAS-UP. The BRAS-UP forwards a subsequent control message according to the primary user forwarding table entry, and updates the primary user forwarding table entry to obtain a target user forwarding table entry after the access process ends.
C. After all access control processes, that is, Neighbor Discovery (ND) and DHCPv6 negotiation end, the BRAS-CP creates a target user forwarding table entry and delivers it to the BRAS-UP. The BRAS-UP forwards user service traffic according to the target user forwarding table entry.

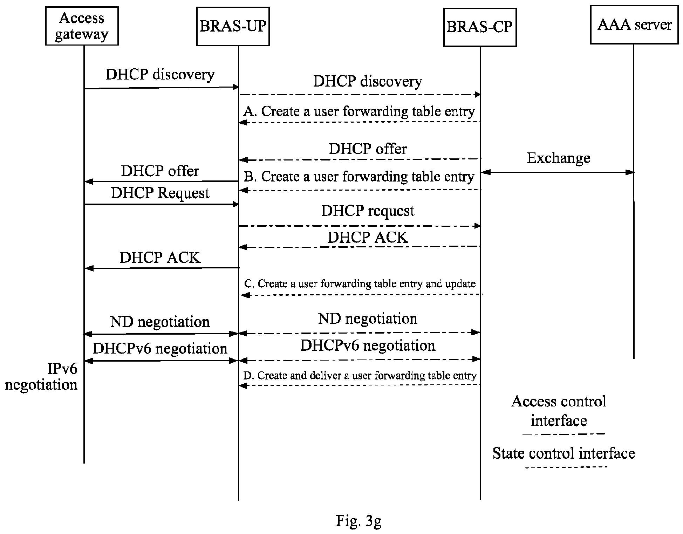

Fig. 3g is a flowchart of a forwarding method in an IPoE dual-stack (IPv4/IPv6) access process according to the present disclosure, and Fig. 3g shows a process of creating and delivering a user forwarding table entry in an IPoE dual-stack (IPv4/IPv6) broadband access process. The user forwarding table entry may be created or updated at the following nodes.
A. After a DHCP discover message is forwarded from the BRAS-UP to the BRAS-CP, the BRAS-CP creates a primary user forwarding table entry, and delivers it to the BRAS-UP through a state control channel between the control plane and the user plane. The BRAS-UP forwards a subsequent user control message according to the primary user forwarding table entry, and updates the forwarding table entry after an access process ends.
B. After AAA authentication is completed in the access control process, the BRAS-CP creates a primary user forwarding table entry, and delivers it to the BRAS-UP. The BRAS-UP forwards a subsequent control message according to the primary user forwarding table entry, and updates the primary user forwarding table entry to obtain a target user forwarding table entry after the access process ends.
C. After an IPv4 IPoE access control process ends, the BRAS-CP creates a user IPv4 forwarding table entry and delivers it to the BRAS-UP.
D. After an IPv6 address allocation process ends, the BRAS-CP creates a user IPv6 forwarding table entry, and delivers it to the BRAS-UP to update the forwarding table entry. The BRAS-UP forwards user service traffic according to the user IPv6 forwarding table entry.

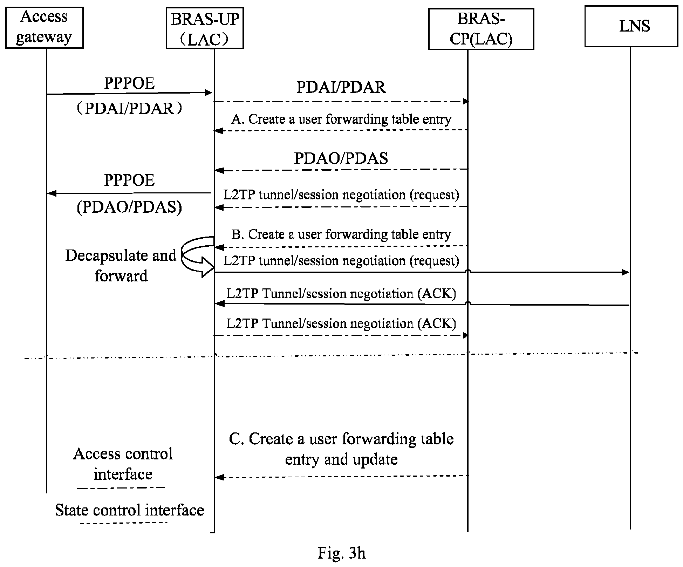

Fig. 3h is a flowchart of a forwarding method in an L2TP (a BRAS serving as an LAC) access process according to the present disclosure, and Fig. 3h shows a process of creating and delivering a user forwarding table entry in an L2TP (the BRAS serving as the LAC) broadband access process. The user forwarding table entry may be created or updated at the following nodes.
A. After a PADI message is forwarded from a BRAS-UP to a BRAS-CP, the BRAS-CP creates a primary user forwarding table entry, and delivers it to the BRAS-UP through a state control channel between the control plane and the user plane. The BRAS-UP forwards a subsequent user control message according to the primary user forwarding table entry, and updates the primary user forwarding table entry to obtain a target user forwarding table entry after an access process ends.
B. After the BRAS-CP sends an L2TP tunnel and session establishment request, the BRAS-CP creates a primary user forwarding table entry, and delivers it to the BRAS-UP. The BRAS-UP forwards a subsequent control message according to the primary user forwarding table entry, and updates the primary user forwarding table entry to obtain a target user forwarding table entry after the access process ends.
C. After all access control processes are completed, the BRAS-CP creates a target user forwarding table entry and delivers it to the BRAS-UP. The BRAS-UP forwards user service traffic according to the target user forwarding table entry.

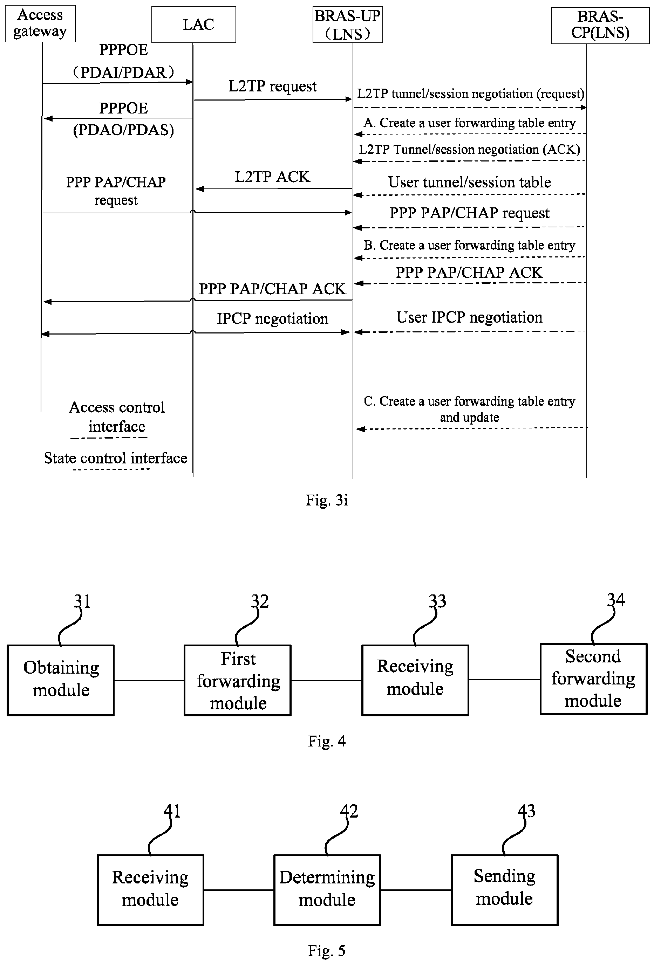

Fig. 3i is a flowchart of a forwarding method in an L2TP (a BRAS serving as an LNS) access process according to the present disclosure, and Fig. 3i shows a process of creating and delivering a user forwarding table entry in an L2TP Network Server (LNS) broadband access process. The user forwarding table entry may be created or updated at the following nodes.
A. After a BRAS-CP receives an L2TP tunnel and session establishment request from a remote LAC forwarded by a BRAS-UP, the BRAS-CP creates a primary user forwarding table entry, and delivers it to the BRAS-UP through a state control channel between the control plane and the user plane. The BRAS-UP forwards a subsequent user control message according to the primary user forwarding table entry, and updates the forwarding table entry after an access process ends.
B. After the BRAS-CP completes a user AAA control process sent by the remote LAC, the BRAS-CP creates a primary user forwarding table entry, and delivers it to the BRAS-UP. The BRAS-UP forwards a subsequent control message according to the primary user forwarding table entry, and updates the primary user forwarding table entry to obtain a target user forwarding table entry after the access process ends.
C. After all access control processes are completed, the BRAS-CP creates a target user forwarding table entry and delivers it to the BRAS-UP. The BRAS-UP forwards user service traffic according to the target user forwarding table entry.

The present disclosure provides a forwarding apparatus. Fig. 4 is a schematic diagram of a structure of a forwarding apparatus according to the present disclosure. The forwarding apparatus may be configured in a BRAS-UP. As shown in Fig. 4, the forwarding apparatus provided by the embodiment of the present disclosure includes: an obtaining module 31, configured to obtain a user access control message; a first forwarding module 32, configured to forward the user access control message and associated identification information of the BRAS-UP to a BRAS-CP; a receiving module 33, configured to receive a primary user forwarding table entry sent by the BRAS-CP, where the primary user forwarding table entry is determined at an access control process node based on the user access control message and the associated identification information, and the access control process node is a node existing before user data traffic reaches the BRAS-UP; and a second forwarding module 34, configured to forward a subsequent user access control message based on the primary user forwarding table entry.

The forwarding apparatus provided by this embodiment is configured to implement the forwarding method in the embodiment shown in Fig. 1, and an implementation principle of the forwarding apparatus provided by this embodiment is similar to that of the embodiment shown in Fig. 1. Therefore, details are not repeated herein again.

On the basis of the foregoing embodiment, a modified embodiment of the foregoing embodiment is proposed. For simplified description, only differences from the foregoing embodiment are described in the modified embodiment.

In an embodiment, the access control process node includes: a node existing after the BRAS-CP obtains the user access control message including basic information of user access; or a node existing after an AAA process for user access control ends.

In an embodiment, the apparatus further includes: a module for receiving a target user forwarding table entry, configured to: receive a target user forwarding table entry, where the target user forwarding table entry is obtained by updating the primary user forwarding table entry based on the obtained user access control message and the associated identification information of the BRAS-UP after the access control process ends.

An embodiment of the present disclosure further provides a forwarding apparatus, which is configured in a BRAS-CP. Fig. 5 is a schematic diagram of a structure of another forwarding apparatus according to the present disclosure. The apparatus includes: a receiving module 41, configured to receive a user access control message and associated identification information of a BRAS-UP sent by the BRAS-UP; a determining module 42, configured to determine a primary user forwarding table entry at an access control process node based on the user access control message and the associated identification information, where the access control process node is a node existing before user data traffic reaches the BRAS-UP; and a sending module 43, configured to send the primary user forwarding table entry to the BRAS-UP.

The forwarding apparatus provided by this embodiment is configured to implement the forwarding method in the embodiment shown in Fig. 2, and an implementation principle of the forwarding apparatus provided by this embodiment is similar to that of the embodiment shown in Fig. 2. Therefore, details are not repeated herein again.

On the basis of the foregoing embodiment, a modified embodiment of the foregoing embodiment is proposed. For simplified description, only differences from the foregoing embodiment are described in the modified embodiment.

In an embodiment, the access control process node includes: a node existing after the user access control message including basic information of user access is obtained; or a node existing after an AAA process for user access control ends.

In an embodiment, the apparatus further includes: an update module, configured to: obtain a target user forwarding table entry by updating the primary user forwarding table entry based on the obtained user access control message and the associated identification information of the BRAS-UP after an access control process ends; and send the target user forwarding table entry to the BRAS-UP.

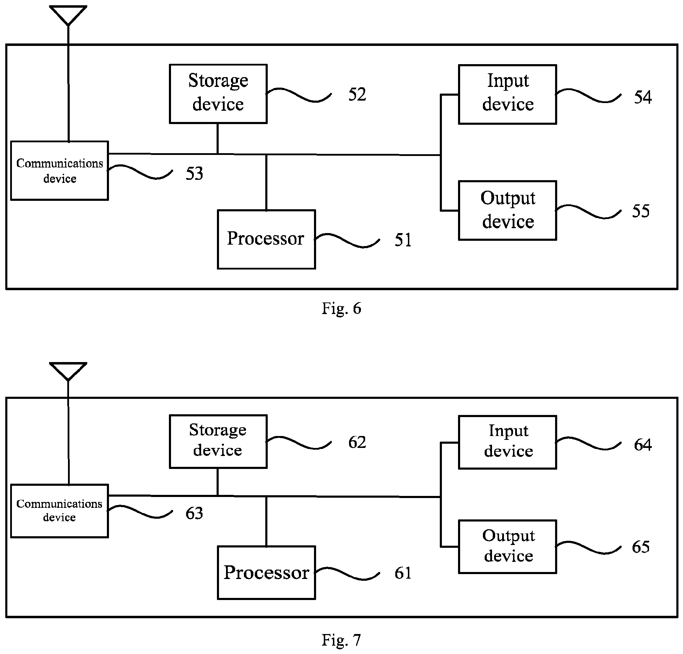

An embodiment of the present disclosure provides a broadband remote access server user plane. Fig. 6 is a schematic diagram of a structure of a broadband remote access server user plane according to the present disclosure. As shown in Fig. 6, the broadband remote access server user plane includes: at least one processor 51 and storage device 52. There may be one or more processors 51, and one processor 51 is taken as an example in Fig. 6. The storage device 52 is configured to store at least one program. The at least one program is executed by the at least one processor 51, so that the at least one processor 51 implements the method described in Fig. 1 of the present disclosure.

The broadband remote access server user plane further includes: a communications apparatus 53, an input apparatus 54 and an output apparatus 55.

The processor 51, the storage device 52, the communications apparatus 53, the input apparatus 54 and the output apparatus 55 in the broadband remote access server user plane can be connected through a bus, which is used as an example in Fig. 6. Alternatively, other manners may be used for connection.

The input apparatus 54 may be configured to receive an input numerical digit or character information and generate a key signal input related to user settings and function control of the broadband remote access server user plane. The output apparatus 55 may include a display device such as a display screen.

The communications apparatus 53 may include a receiver and a transmitter. The communications apparatus 53 is configured to transmit and receive information according to control of the processor 51. The information includes but not limited to a user access control message, associated identification information, a primary user forwarding table entry and a target user forwarding table entry.

As a computer-readable storage medium, the storage device 52 can be configured to store a software program, a computer-executable program and a module, for example, program instructions/modules (such as the obtaining module 31, the first forwarding module 32, the receiving module 33 and the second forwarding module 34 in the forwarding apparatus) corresponding to the method described in Fig. 1 of the present disclosure. The storage device 52 may include a program storage area and a data storage area, where the program storage area may store an operating system and at least one application program required by a function; and the data storage area may store data created according to use of the broadband remote access server user plane, and the like. In addition, the storage device 52 may include a high-speed random access memory and a non-volatile memory, for example, at least one magnetic disk storage device, a flash memory device, or another non-volatile solid-state storage device. In some examples, the storage device 52 may further include memories remotely disposed from the processor 51, and these remote memories may be connected to the broadband remote access server user plane through a network. Examples of the above-mentioned network include the Internet, an intranet, a local area network, a mobile communication network, and a combination thereof.

The present disclosure further provides a broadband remote access server control plane. Fig. 7 is a schematic diagram of a structure of a broadband remote access server control plane according to the present disclosure. As shown in Fig. 7, the broadband remote access server control plane includes: at least one processor 61 and storage device 62. There may be one or more processors 61 in the broadband remote access server control plane, and one processor 61 is used as an example in Fig. 7. The storage device 62 is configured to store at least one program. The at least one program is executed by the at least one processor 61, so that the at least one processor 61 implements the method described in Fig. 2 of the present disclosure.

The broadband remote access server control plane further includes: a communications apparatus 63, an input apparatus 64 and an output apparatus 65.

The processor 61, the storage device 62, the communications apparatus 63, the input apparatus 64 and the output apparatus 65 in the broadband remote access server control plane can be connected through a bus, which is used as an example in Fig. 7. Alternatively, other manners may be used for connection.

The input apparatus 64 may be configured to receive an input numerical digit or character information and generate a key signal input related to user settings and function control of the broadband remote access server control plane. The output apparatus 65 may include a display device such as a display screen.

The communications apparatus 63 may include a receiver and a transmitter. The communications apparatus 63 is configured to transmit and receive information according to control of the processor 61. The information includes but not limited to a user access control message, associated identification information, a primary user forwarding table entry and a target user forwarding table entry.

As a computer-readable storage medium, the storage device 62 can be configured to store a software program, a computer-executable program and a module, for example, program instructions/modules (such as the receiving module 41, the determining module 42 and the sending module 43 in the forwarding apparatus) corresponding to the method described in Fig. 2 of the present disclosure. The storage device 62 may include a program storage area and a data storage area, where the program storage area may store an operating system and at least one application program required by a function; and the data storage area may store data created according to use of the broadband remote access server control plane, and the like. In addition, the storage device 62 may include a high-speed random access memory and a non-volatile memory, for example, at least one magnetic disk storage device, a flash memory device, or another non-volatile solid-state storage device. In some examples, the storage device 62 may further include memories remotely disposed from the processor 61, and these remote memories may be connected to the broadband remote access server control plane through a network. Examples of the above-mentioned network include the Internet, an intranet, a local area network, a mobile communication network, and a combination thereof.

An embodiment of the present disclosure further provides a storage medium storing a computer program which, when executed by a processor, causes the processor to perform any one of the forwarding methods in the embodiments of the present disclosure. For example, the forwarding method applicable to a BRAS-UP and the forwarding method applicable to a BRAS-CP are implemented. The forwarding method applicable to the BRAS-UP includes: obtaining a user access control message; forwarding the user access control message and associated identification information of the BRAS-UP to the BRAS-CP; receiving a primary user forwarding table entry sent by the BRAS-CP, where the primary user forwarding table entry is determined at an access control process node based on the user access control message and the associated identification information, and the access control process node is a node existing before user data traffic reaches the BRAS-UP; and controlling forwarding of a subsequent user access control message based on the primary user forwarding table entry.

The forwarding method applicable to the BRAS-CP includes: receiving a user access control message and associated identification information of the BRAS-UP sent by the BRAS-UP; determining a primary user forwarding table entry at an access control process node based on the user access control message and the associated identification information, where the access control process node is a node existing before user data traffic reaches the BRAS-UP; and sending the primary user forwarding table entry to the BRAS-UP.

The computer-readable storage medium of this embodiment may be any combination of one or more computer-readable media. The computer-readable medium may be a computer-readable signal medium or a computer-readable storage medium. For example, the computer-readable storage medium may be, but is not limited to, electrical, magnetic, optical, electromagnetic, infrared, or semiconductor system, an apparatus or a device, or any combination thereof. Examples of the computer-readable storage medium (a non-exhaustive list) include: an electrical connection with one or more wires, a portable computer disk, a hard disk, a Random Access Memory (RAM), a Read-Only Memory (ROM), an erasable programmable read-only memory, EPROM), a flash memory, an optical fiber, a Compact Disc Read-Only Memory (CD-ROM), an optical storage device, a magnetic storage device or any proper combination thereof. The computer-readable storage medium may be any tangible medium including or storing a program, and the program may be used by or used in combination with an instruction execution system, apparatus or device.

The computer-readable signal medium may include a data signal propagated in a baseband or propagated as a part of a carrier, and carries computer-readable program code. Such a propagated data signal may be in multiple forms, including but not limited to: an electromagnetic signal, an optical signal, or any proper combination thereof. The computer-readable signal medium may alternatively be any computer-readable medium other than the computer-readable storage medium. The computer-readable medium may send, propagate or transmit a program used by or used in combination with an instruction execution system, apparatus or device.

The program code included in the computer-readable medium may be transmitted by any suitable medium, including but not limited to: radio, an electric cable, an optical-fiber cable, Radio Frequency (RF), or any proper combination thereof.

Computer program code for executing the operations in the present disclosure may be compiled by using one or more program design languages or a combination thereof. The programming languages include object oriented programming languages, such as Java, Smalltalk, and C++, and conventional procedural programming languages, such as C or similar programming languages. The program code can be executed fully on a user computer, executed partially on a user computer, executed as an independent software package, executed partially on a user computer and partially on a remote computer, or executed fully on a remote computer or a server. In a circumstance in which a remote computer is involved, the remote computer may be connected to a user computer via any type of network, including a Local Area Network (LAN) or a Wide Area Network (WAN), or may be connected to an external computer (for example, connected via the Internet by using an Internet service provider).

The above-described embodiments are only example embodiments of the present disclosure, and are not intended to limit the scope of protection of the present disclosure.

Generally speaking, various embodiments of the present disclosure can be implemented in hardware or dedicated circuits, software, logic or any combination thereof. For example, some aspects can be implemented in hardware, while other aspects can be implemented in firmware or software that can be executed by a controller, a microprocessor or another computing device. However, the present disclosure is not limited thereto.

Embodiments of the present disclosure can be implemented by a data processor of a mobile device executing computer program instructions, for example, in a processor entity, or by hardware, or by a combination of software and hardware. The computer program instructions may be assembly instructions, Instruction Set Architecture (ISA) instructions, machine instructions, machine-related instructions, microcode, firmware instructions, state setting data or source code or object code written in any combination of one or more programming languages.

The block diagram of any logic process in the drawings of the present disclosure can represent program steps, or can represent interconnected logic circuits, modules and functions, or can represent a combination of program steps and logic circuits, modules and functions. The computer program may be stored in a memory. The memory may be any type suitable for a local technical environment and can be implemented using any suitable data storage technology, for example but not limited to a ROM, a RAM, an optical storage device and systems (Digital Video Disc (DVD) or Compact Disk (CD)). The computer-readable medium may include a non-transitory storage medium. The data processor may be any type suitable for the local technical environment, for example but not limited to a general-purpose computer, a special-purpose computer, a microprocessor, a Digital Signal Processor (DSP), an Application-Specific Integrated Circuit (ASIC), a Field-Programmable Gate Array (FPGA) and a processor based on a multi-core processor architecture

## Claims

1. A forwarding method applicable to a broadband remote access server user plane (BRAS-UP), comprising:
obtaining a user access control message;
forwarding the user access control message and associated identification information of the BRAS-UP to a broadband remote access server control plane (BRAS-CP);
receiving a primary user forwarding table entry sent by the BRAS-CP, wherein the primary user forwarding table entry is determined at an access control process node based on the user access control message and the associated identification information, and the access control process node is a node existing before user data traffic reaches the BRAS-UP; and
forwarding a subsequent user access control message based on the primary user forwarding table entry.

2. The method of claim 1, wherein the access control process node comprises:
a node existing after the BRAS-CP obtaining the user access control message comprising basic information of user access; or
a node existing after the end of an Authentication, Authorization and Accounting (AAA) process for user access control.

3. The method of claim 1, further comprising:
receiving a target user forwarding table entry sent by the BRAS-CP, wherein the target user forwarding table entry is obtained by updating the primary user forwarding table entry based on the obtained user access control message and the associated identification information of the BRAS-UP after the end of an access control process.

4. A forwarding method applicable to a broadband remote access server control plane (BRAS-CP), comprising:
receiving a user access control message and associated identification information of a broadband remote access server user plane (BRAS-UP) sent by the BRAS-UP;
determining a primary user forwarding table entry at an access control process node based on the user access control message and the associated identification information, wherein the access control process node is a node existing before user data traffic reaches the BRAS-UP; and
sending the primary user forwarding table entry to the BRAS-UP.

5. The method of claim 4, wherein the access control process node comprises:
a node existing after obtaining the user access control message comprising basic information of user access; or
a node existing after the end of an Authentication, Authorization and Accounting (AAA) process for user access control.

6. The method of claim 4, further comprising:
obtaining a target user forwarding table entry by updating the primary user forwarding table entry based on the obtained user access control message and the associated identification information of the BRAS-UP after the end of an access control process; and
sending the target user forwarding table entry to the BRAS-UP.

7. A forwarding apparatus configurable on a broadband remote access server user plane (BRAS-UP), comprising:
an obtaining module, configured to obtain a user access control message;
a first forwarding module, configured to forward the user access control message and associated identification information of the BRAS-UP to a broadband remote access server control plane (BRAS-CP);
a receiving module, configured to receive a primary user forwarding table entry sent by the BRAS-CP, wherein the primary user forwarding table entry is determined at an access control process node based on the user access control message and the associated identification information of the BRAS-UP, and the access control process node is a node existing before user data traffic reaches the BRAS-UP; and
a second forwarding module, configured to forward a subsequent user access control message based on the primary user forwarding table entry.

8. A forwarding apparatus configurable on a broadband remote access server control plane (BRAS-CP), comprising:
a receiving module, configured to receive a user access control message and associated identification information of a broadband remote access server user plane (BRAS-UP) sent by the BRAS-UP;
a determining module, configured to determine a primary user forwarding table entry at an access control process node based on the user access control message and the associated identification information, wherein the access control process node is a node existing before user data traffic reaches the BRAS-UP; and
a sending module, configured to send the primary user forwarding table entry to the BRAS-UP.

9. A broadband remote access server user plane, comprising:
at least one processor; and
a storage device, configured to store at least one program which, when executed by the at least one processor, causes the at least one processor to perform the method of any one of claims 1 to 3.

10. A broadband remote access server control plane, comprising:
at least one processor; and
a storage device, configured to store at least one program which, when executed by the at least one processor, causes the at least one processor to perform the method of any one of claims 4 to 6.

11. A storage medium storing a computer program which, when executed by a processor, causes the processor to perform the method of any one of claims 1 to 6.
